# EUROPÄISCHE PATENTSCHRIFT

(11) **EP 2 000 742 B1**
(45) Veröffentlichungstag und Bekanntmachung des Hinweises auf die Patenterteilung: **18.01.2017**
(21) Anmeldenummer: 08009871.8
(22) Anmeldetag: 30.05.2008
(51) Int. Cl.: F24D 19/10, F24D 17/00

(54) **Mischeinrichtung zur Einstellung der Warmwassertemperatur**
Mixing device for setting the hot water temperature
Mélangeur pour configurer la température de l'eau chaude

(30) Priorität: 08.06.2007 DE 202007008024 U
(43) Veröffentlichungstag der Anmeldung: 10.12.2008
(73) Patentinhaber: Robert Bosch GmbH, 70442 Stuttgart (DE)
(72) Erfinder: Coquim, Calisto Oliveira, 3070-538 Seixo (PT); Glummert, Michael, 3810-089 Aveiro (S.Bernardo) (PT); Ribeiro, Bruno, 4430-458 Vila Nova de Gaia (PT)

(56) Entgegenhaltungen:
- DE-A1- 10 245 571
- DE-B4- 10 212 072
- JP-A- S59 119 122

## Beschreibung

Die Erfindung betrifft eine Mischeinrichtung zur Einstellung der Warmwassertemperatur nach dem Oberbegriff des Patentanspruches 1.

Für Heizzwecke und Warmwasserbereitung kommt häufig zusätzliche Energie zum Einsatz, welche aus einer alternativen Wärmequelle, wie zum Beispiel einer Solaranlage, gewonnen wird. Natürlich muss der Energie aus einer alternativen Wärmequelle dabei der Vorrang eingeräumt werden, aber zur Sicherstellung der gewünschten Wärmeanforderung und des gewünschten Warmwasser-Komforts sind derartige Systeme in der Regel mit einem Wärmerzeuger, welcher nach dem Prinzip eines Durchlauferhitzers arbeitet, kombiniert. Dieser sorgt für eine Nachheizung, wenn beispielsweise nicht ausreichend Solarwärme zur Verfügung steht.

Gattungsgemäß wird mit einer Mischeinrichtung die Warmwassertemperatur für eine mit einem Warmwasserausgang eines Wärmeerzeugers und einem solar beheizten Warmwasserkreislauf in Verbindung stehende Warmwasserversorgungsanlage eingestellt.

Aus der DE 195 30 000 C2 ist eine Warmwasserbereitungsanlage mit einem elektrischen Durchlauferhitzer bekannt, bei dem eine Steuerelektronik die Heizleistung von in seiner Wasserdurchlaufstrecke angeordneten Heizkörpern regelt, um das auslaufende Wasser auf eine einstellbare Solltemperatur zu bringen. Dabei ist ein von der Steuerelektronik steuerbares Drei-Wege-Ventil vorgesehen, welches eingangsseitig einerseits an einen Zulauf für vorerwärmtes Wasser und andererseits an einen Zulauf für Kaltwasser, und zugangsseitig an die Wasserdurchlaufstrecke angeschlossen ist. Es ist ein Temperaturfühler vorgesehen, der die Temperatur des in die Wasserdurchlaufstrecke einlaufenden Wassers erfasst. Wenn die Einlauftemperatur größer als die eingestellte Solltemperatur ist, wird das Dreiwege-Ventil so gestellt, dass zum Erreichen der Solltemperatur dem vorerwärmten Wasser Kaltwasser beigemischt wird. Für den Fall, dass die Einlauftemperatur gleich oder kleiner als die eingestellte Solltemperatur ist, wird das Drei-Wege-Ventil so gestellt, dass der Wasserdurchlaufstrecke nur das vorerwärmte Wasser zuläuft und vom Durchlauferhitzer nötigenfalls auf Solltemperatur erwärmt wird.

Weiterhin ist aus der DE 102 12 072 B4 eine Solaranlage mit einem Durchlauferhitzer und einer in Abhängigkeit von der Temperatur des vom Warmwasserspeicher abgegebenen Warmwassers gesteuerten Umschaltsteuerung für die Weiterleitung des Warmwassers an die Verbraucher und für die Zuführung von Kaltwasser zum Warmwasserspeicher bekannt. Dabei weist die Umschaltsteuerug eine Vier-Wege-Umschalteinrichtung mit drei Schaltstellungen auf, die in Abhängigkeit von der Temperatur des vom Warmwasserspeicher abgegebenen Warmwassers einstellbar sind. So wird bei einer ersten Temperatur unterhalb der vorgegebenen Betriebstemperatur in der ersten Schaltstellung der Umschalteinrichtung das Warmwasser über den Durchlauferhitzer den Verbrauchern zugeführt. Bei einer zweiten Temperatur bis zur vorgegebenen Betriebstemperatur in der zweiten Schaltstellung der Umschalteinrichtung wird das Warmwasser direkt den Verbrauchern zugeführt. Bei einer dritten Temperatur über der vorgegebenen Betriebstemperatur in der dritten Schaltstellung der Umschalteinrichtung wird bei Aufrechterhaltung der zweiten Schaltstellung dem Warmwasser Kaltwasser zugeführt.

Die JP 59119122 A offenbart eine Mischeinrichtung zur Einstellung der Warmwassertemperatur für eine Warmwasserversorgungsanlage, die insbesondere mit einem Warmwasserausgang eines Wärmeerzeugers und einer weiteren Warmwasserquelle in Verbindung stehen kann, wobei ein mit einem Kaltwasseranschluss in Verbindung stehendes erstes Mischventil mit einem Warmwasseranschluss für eine sich anschließende Warmwasserversorgungsleitung vorgesehen ist, wobei das erste Mischventil an ein zweites Mischventil angeschlossen ist, und wobei der erste Anschluss des zweiten Mischventils mit der Warmwasserquelle verbindbar ist, der zweite Anschluss des zweiten Mischventils mit einem Warmwassereintritt in den Wärmeerzeuger verbindbar ist, und der dritte Anschluss des zweiten Mischventils mit dem ersten Mischventil verbunden ist.

Generell besteht das Problem, dass bei vielen bekannten Solaranlagen ein Wärmeerzeuger immer durchströmt wird. Dabei entstehen Wärmeverluste im Wärmeerzeuger und bei zu hoher Warmwasser-Eintrittstemperatur kann es möglicherweise zu Beschädigungen oder zu Auslauftemperaturschwankungen kommen.

Der Erfindung liegt die Aufgabe zu Grunde, die Anbindung einer Solaranlage an einen zugeordneten Wärmeerzeuger zu optimieren.

Erfindungsgemäß wird dies mit den Merkmalen des Patentanspruches 1 gelöst. Vorteilhafte Weiterbildungen sind den Unteransprüchen zu entnehmen.

Die Mischeinrichtung, bei der das erste thermostatische Mischventil stromaufwärts an ein zweites thermostatisches Mischventil angeschlossen ist, wobei der erste Anschluss des zweiten thermostatischen Mischventils mit der Warmwasseraustrittsleitung aus dem solar beheizten Warmwasserkreislauf verbindbar ist, der zweite Anschluss des zweiten thermostatischen Mischventils mit einem Warmwassereintritt in den Wärmeerzeuger verbindbar ist, und der dritte Anschluss des zweiten thermostatischen Mischventils mit dem ersten thermostatischen Mischventil verbunden ist, ist dadurch gekennzeichnet, dass das erste thermostatische Mischventil an den Warmwasserausgang des Wärmeerzeugers anschließbar ist und dass der Warmwasserausgang des Wärmeerzeugersan die Verbindungsleitung zwischen dem ersten und dem zweiten thermostatischen Mischventil anschließbar ist.

Der erste Anschluss am zweiten thermostatischen Mischventil mit der Warmwasseraustrittsleitung aus dem solar beheizten Warmwasserkreislauf ist zum dritten Anschluss mit dem stromabwärts nachfolgenden ersten thermostatischen Mischventil durchgeschaltet und der Warmwasserkreislauf über den Wärmeerzeuger ist dann gesperrt, wenn die Temperatur des vorgewärmten Warmwassers aus dem solar beheizten Warmwasserkreislauf einen vorgebbaren Schwellwert erreicht hat. Im Umkehrfall, nämlich wenn die Temperatur des vorgewärmten Warmwassers aus dem solar beheizten Warmwasserkreislauf unter einem vorgebbaren Schwellwert liegt, ist der erste Anschluss am zweiten thermostatischen Mischventil mit der Warmwasseraustrittsleitung aus dem solar beheizten Warmwasserkreislauf zum zweiten Anschluss mit einem Warmwassereintritt in den Wärmeerzeuger durchgeschaltet. Dieser wird dann durchströmt.

Vorzugsweise beträgt der Schwellwert für das zweite thermostatische Mischventil, für die Temperatur des vorgewärmtes Warmwassers aus dem solar beheizten Warmwasserkreislauf, etwa 45 °C. Diese Temperatur ist im Bereich von 35 °C bis 55 °C einstellbar. Auch sind die Schaltbedingungen des ersten und zweiten thermostatischen Mischventils einstellbar. Vorteilhafterweise sind das erste und zweite thermostatische Mischventil mit allen Komponenten in einem Gehäuse als zusammengefasste Einheit angeordnet, so dass sich diese Baugruppe leicht mit einem zugeordneten Wärmeerzeuger kombinieren lässt.

Mit der Erfindung steht eine einfache, autark arbeitende und anschlussfertige Baugruppe zur Verfügung, mit der die Anbindung einer Solaranlage an einen zugeordneten Wärmeerzeuger optimiert wird. In Verbindung mit einer Solaranlage wird erfindungsgemäß der Wärmeerzeuger nur dann durchströmt, wenn nicht genügend Solarwärme zur Verfügung steht. Unnötige Brennerstarts bzw. -laufzeiten, Wärmeverluste im Wärmeerzeuger und ungünstig hohe Warmwasser-Temperaturen werden daher vermieden. Auch ergeben sich geringere Druckverluste, wenn die Strömung nicht über den Wärmeerzeuger geführt wird.

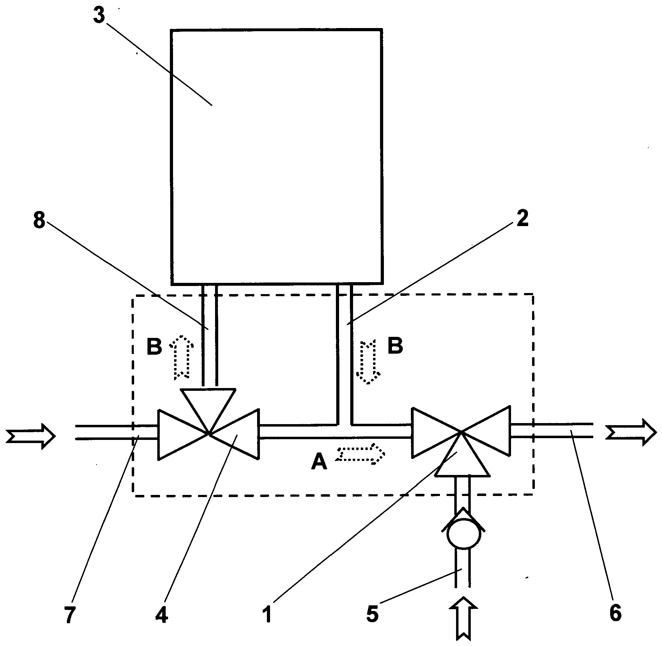

Die Zeichnung stellt ein Ausführungsbeispiel der Erfindung dar und zeigt in einer einzigen Figur den schematischen Aufbau einer an einen Wärmeerzeuger angeschlossenen Mischeinrichtung zur Einstellung der Warmwassertemperatur.

Die Mischeinrichtung zur Einstellung der Warmwassertemperatur besteht im Wesentlichen aus einem ersten thermostatischen Mischventil 1, welches an den Warmwasserausgang 2 eines Wärmeerzeugers 3 und stromaufwärts an ein zweites thermostatisches Mischventil 4 angeschlossen ist. Am thermostatischen Mischventil 1 befindet sich ein Kaltwasseranschluss 5 und ein Warmwasseranschluss 6 für eine sich anschließende Warmwasserversorgungsleitung. Das zweite thermostatische Mischventil 4 ist an eine Warmwasseraustrittsleitung 7 aus einem solar beheizten Warmwasserkreislauf angeschlossen und außerdem mit dem Warmwassereintritt 8 in den Wärmeerzeuger 3 sowie dem thermostatischen Mischventil 1 verbunden.

Der Pfeil A zeigt die Direktströmung zwischen dem zweiten thermostatischen Mischventil 4 und dem stromabwärts nachfolgenden ersten thermostatischen Mischventil 1 für den Betriebszustand, wenn die Temperatur des vorgewärmten Warmwassers aus dem solar beheizten Warmwasserkreislauf einen vorgebbaren Schwellwert erreicht hat. Dann ist der Warmwasserkreislauf über den Wärmeerzeuger 3 gesperrt.

Dagegen verdeutlichen die Pfeile B die Durchströmung des Wärmeerzeugers 3, ausgehend vom zweiten thermostatischen Mischventil 4, über den Warmwassereintritt 8 und den Warmwasserausgang 2 des Wärmeerzeugers 3, bis zum ersten thermostatischen Mischventil 1. Dieser Betriebszustand liegt vor, wenn die Temperatur des vorgewärmten Warmwassers aus dem solar beheizten Warmwasserkreislauf unter einem vorgebbaren Schwellwert liegt und eine Nachheizung erforderlich ist.

## Patentansprüche

1. Mischeinrichtung zur Einstellung der Warmwassertemperatur für eine Warmwasserversorgungsanlage, die insbesondere mit einem Warmwasserausgang (2) eines Wärmeerzeugers (3), welcher nach dem Prinzip eines Durchlauferhitzers arbeitet, und einem solar beheizten Warmwasserkreislauf in Verbindung stehen kann, wobei ein mit einem Kaltwasseranschluss (5) in Verbindung stehendes erstes thermostatisches Mischventil (1) mit einem Warmwasseranschluss (6) für eine sich anschließende Warmwasserversorgungsleitung und ein zweites thermostatisches Mischventil (4) vorgesehen sind,
wobei das erste thermostatische Mischventil (1) stromaufwärts an das zweite thermostatische Mischventil (4) angeschlossen ist, und wobei der erste Anschluss des zweiten thermostatischen Mischventils (4) mit der Warmwasseraustrittsleitung (7) aus dem solar beheizten Warmwasserkreislauf verbindbar ist, der zweite Anschluss des zweiten thermostatischen Mischventils (4) mit einem Warmwassereintritt (8) in den Wärmeerzeuger (3) verbindbar ist, und der dritte Anschluss des zweiten thermostatischen Mischventils (4) mit dem ersten thermostatischen Mischventil (1) verbunden ist,
**dadurch gekennzeichnet, dass** das erste thermostatische Mischventil (1) an den Warmwasserausgang (2) des Wärmeerzeugers (3) anschließbar ist, wobei der Anschluss des Warmwasserausgangs (2) des Wärmeerzeugers (3) an die Verbindungsleitung zwischen dem ersten und dem zweiten thermostatischen Mischventil erfolgt.

2. Mischeinrichtung nach Anspruch 1,
**dadurch gekennzeichnet, dass** der erste Anschluss des zweiten thermostatischen Mischventils (4), verbindbar mit der Warmwasseraustrittsleitung (7) aus dem solar beheizten Warmwasserkreislauf, zum dritten Anschluss des zweiten thermostatischen Mischventils (4), verbunden mit dem stromabwärts nachfolgenden ersten thermostatischen Mischventil (1), durchgeschaltet ist und dass der Warmwasserkreislauf über den mit der Mischeinrichtung verbindbaren Wärmeerzeuger (3) gesperrt ist, wenn die Temperatur des vorgewärmten Warmwassers aus dem solar beheizten Warmwasserkreislauf einen vorgebbaren Schwellwert erreicht hat.

3. Mischeinrichtung nach Anspruch 1 oder 2,
**dadurch gekennzeichnet, dass** der erste Anschluss des zweiten thermostatischen Mischventils (4), verbindbar mit der Warmwasseraustrittsleitung (7) aus dem solar beheizten Warmwasserkreislauf, zum zweiten Anschluss des zweiten thermostatischen Mischventils (4), verbindbar mit einem Warmwassereintritt (8) in den Wärmeerzeuger (3), durchgeschaltet ist und der mit der Mischeinrichtung verbindbare Wärmeerzeuger (3) durchströmt ist, wenn die Temperatur des vorgewärmten Warmwassers aus dem solar beheizten Warmwasserkreislauf unter einem vorgebbaren Schwellwert liegt.

4. Mischeinrichtung nach einem der Ansprüche 1 bis 3,
**dadurch gekennzeichnet, dass** die Schaltbedingungen des ersten thermostatischen Mischventils (1) sowie des zweiten thermostatischen Mischventils (4) einstellbar sind.

5. Mischeinrichtung nach einem der Ansprüche 1 bis 4,
**dadurch gekennzeichnet, dass** der Schwellwert für das zweite thermostatische Mischventil (4), für die Temperatur des vorgewärmten Warmwassers aus dem solar beheizten Warmwasserkreislauf, im Bereich von 35 °C bis 55 °C einstellbar ist.

6. Mischeinrichtung nach einem der Ansprüche 1 bis 5,
**dadurch gekennzeichnet, dass** das erste thermostatische Mischventil (1) und das zweite thermostatische Mischventil (4) mit allen Komponenten in einem Gehäuse als zusammengefasste Einheit angeordnet sind.

## Claims

1. Mixing device for setting the warm water temperature for a warm water supply system which can be connected, in particular, to a warm water outlet (2) of a heat generator (3) which operates according to the principle of a flow heater, and to a solar heated warm water circuit, a first thermostatic mixing valve (1) which is connected to a cold water connector (5), with a warm water connector (6) for an attached warm water supply line, and a second thermostatic mixing valve (4) being provided,
the first thermostatic mixing valve (1) being connected upstream to the second thermostatic mixing valve (4), and it being possible for the first connector of the second thermostatic mixing valve (4) to be connected to the warm water outlet line (7) from the solar heated warm water circuit, it being possible for the second connector of the second thermostatic mixing valve (4) to be connected to a warm water inlet (8) into the heat generator (3), and the third connector of the second thermostatic mixing valve (4) being connected to the first thermostatic mixing valve (1),
**characterized in that** the first thermostatic mixing valve (1) can be connected to the warm water outlet (2) of the heat generator (3), the warm water outlet (2) of the heat generator (3) being connected to the connecting line between the first and the second thermostatic mixing valve.

2. Mixing device according to Claim 1,
**characterized in that** the first connector of the second thermostatic mixing valve (4), capable of being connected to the warm water outlet line (7) from the solar heated warm water circuit, is switched through to the third connector of the second thermostatic mixing valve (4), connected to the first thermostatic mixing valve (1) which follows downstream, and **in that** the warm water circuit is shut off via the heat generator (3) which can be connected to the mixing device when the temperature of the preheated warm water from the solar heated warm water circuit has reached a predefinable threshold value.

3. Mixing device according to Claim 1 or 2, **characterized in that** the first connector of the second thermostatic mixing valve (4), capable of being connected to the warm water outlet line (7) from the solar heated warm water circuit, is switched through to the second connector of the second thermostatic mixing valve (4), capable of being connected to a warm water inlet (8) into the heat generator (3), and the heat generator (3) which can be connected to the mixing device is flowed through when the temperature of the preheated warm water from the solar heated warm water circuit lies below a predefinable threshold value.

4. Mixing device according to one of Claims 1 to 3, **characterized in that** the switching conditions of the first thermostatic mixing valve (1) and of the second thermostatic mixing valve (4) are adjustable.

5. Mixing device according to one of Claims 1 to 4, **characterized in that** the threshold value for the second thermostatic mixing valve (4), for the temperature of the preheated warm water from the solar heated warm water circuit, is adjustable in the range from 35°C to 55°C.

6. Mixing device according to one of Claims 1 to 5, **characterized in that** the first thermostatic mixing valve (1) and the second thermostatic mixing valve (4) are arranged with all components in a housing as one combined unit.

## Revendications

1. Dispositif mélangeur permettant d'ajuster la température de l'eau chaude pour une installation d'alimentation en eau chaude qui peut être reliée en particulier à une sortie d'eau chaude (2) d'un générateur de chaleur (3) fonctionnant selon le principe d'un chauffe-eau instantané et avec un circuit d'eau chaude chauffé par énergie solaire, dans lequel il est prévu une première vanne mélangeuse thermostatique (1) ayant un raccord d'eau chaude (6) destiné à une ligne d'alimentation en eau chaude suivante et reliée à un raccord d'eau froide (5) et une deuxième vanne mélangeuse thermostatique (4),
dans lequel la première vanne mélangeuse thermostatique (1) est raccordée dans le sens de l'écoulement à la deuxième vanne mélangeuse thermostatique (4), et dans lequel le premier raccord de la deuxième vanne mélangeuse thermostatique (4) peut être relié à la ligne de sortie d'eau chaude (7) provenant du circuit d'eau chaude chauffé par énergie solaire, le deuxième raccord de la deuxième vanne mélangeuse thermostatique (4) peut être relié à une entrée d'eau chaude (8) dans le générateur de chaleur (3) et le troisième raccord de la deuxième vanne mélangeuse thermostatique (4) est relié à la première vanne mélangeuse thermostatique (1),
**caractérisé en ce que** la première vanne mélangeuse thermostatique (1) peut être raccordée à la sortie d'eau chaude (2) du générateur de chaleur (3), dans lequel le raccordement de la sortie d'eau chaude (2) du générateur de chaleur (3) est effectué au niveau de la ligne de liaison entre les première et deuxième vannes mélangeuses thermostatiques.

2. Dispositif mélangeur selon la revendication 1, **caractérisé en ce que** le premier raccord de la deuxième vanne mélangeuse thermostatique (4), pouvant être relié à la ligne de sortie d'eau chaude (7) provenant du circuit d'eau chaude chauffé par énergie solaire, est relié au troisième raccord de la deuxième vanne mélangeuse thermostatique (4), en étant raccordé à la première vanne mélangeuse thermostatique (1) située en aval dans le sens de l'écoulement, et **en ce que** le circuit d'eau chaude est bloqué par l'intermédiaire du générateur de chaleur (3) pouvant être relié au dispositif mélangeur lorsque la température de l'eau chaude préchauffée provenant du circuit d'eau chaude chauffée par énergie solaire a atteint une valeur de seuil pouvant être prédéterminée.

3. Dispositif mélangeur selon la revendication 1 ou 2,
**caractérisé en ce que** le premier raccord de la deuxième vanne mélangeuse thermostatique (4), pouvant être relié à la ligne de sortie d'eau chaude (7) provenant du circuit d'eau chaude chauffé par énergie solaire, est relié au deuxième raccord de la deuxième vanne mélangeuse thermostatique (4), pouvant être relié à une entrée d'eau chaude (8) dans le générateur de chaleur (3), et le générateur de chaleur (3) pouvant être relié au dispositif mélangeur est traversé par un écoulement lorsque la température de l'eau chaude préchauffée provenant du circuit d'eau chaude chauffé par énergie solaire se situe en dessous d'une valeur de seuil pouvant être prédéterminée.

4. Dispositif mélangeur selon l'une quelconque des revendications 1 à 3,
**caractérisé en ce que** les conditions de commutation de la première vanne mélangeuse thermostatique (1) et de la deuxième vanne mélangeuse thermostatique (4) peuvent être ajustées.

5. Dispositif mélangeur selon l'une quelconque des revendications 1 à 4,
**caractérisé en ce que** la valeur de seuil peut être ajustée pour la deuxième vanne mélangeuse thermostatique (4), en ce qui concerne la température de l'eau chaude préchauffée provenant du circuit d'eau chaude chauffée par énergie solaire, dans la plage de 35°C à 55°C.

6. Dispositif mélangeur selon l'une quelconque des revendications 1 à 5,
**caractérisé en ce que** la première vanne mélangeuse thermostatique (1) et la deuxième vanne mélangeuse thermostatique (4) sont agencées avec tous les composants dans un boîtier formant une unité regroupée.
